# EUROPEAN PATENT APPLICATION

(11) **EP 2 298 062 A1**
(43) Date of publication of application: **23.03.2011**
(21) Application number: 10177392.7
(22) Date of filing: 17.09.2010
(51) Int. Cl.: A01D 46/28

(54) **Harvesting machine provided with means for the selection of the harvest**

(30) Priority: 17.09.2009 IT MI20091588
(71) Applicant: X-Technology S.r.l., 43044 Collecchio (PR) (IT)
(72) Inventor: Sandei, Luigi, 43044, COLLECCHIO (PR (IT)
(74) Representative: Fisauli, Beatrice A. M.

(57) **Abstract**

The description is of a grape harvester featuring the fact of envisaging harvest selection means able to separate out the fruit from any undesired foreign bodies. Said means comprise:
- at least one sensor (23) able to scan the harvest;
- a lighting system (24, 25) able to illuminate the objects to be scanned;
- an expulsion device (26) able to separate out the fruit from any foreign bodies;
- a control system able to receive data sent by the sensor (23), to analyse said data and to command the expulsion device (26);
- means for the collection of expelled foreign bodies.

## Description

This invention concerns an improved grape harvester or rather, more specifically, a grape harvester equipped with means by which to select the grapes harvested.

The invention comes under the sector of agricultural machinery and, more specifically, grape harvesters.

Mechanical grape harvesting, carried out using machines referred to as 'grape harvesters', is today becoming more and more widespread, also thanks to the continuous innovation in the sector, which has made these machines highly efficient and well able to work in a very similar way to manual harvesting. These machines generally consist of self-propelled or towed vehicles designed to work over by straddling the row and fitted with shakers positioned at the two sides of the row. These shakers exert a mechanical action directly on the plant and its fruit, causing the bunches and grapes to become detached.

The fallen fruit is therefore collected into collection tanks referred to as 'baskets' assembled onto the machine. When the baskets are completely full, the contents are transferred onto trailers that in turn take it to the cellars.

When shaking the plant, what we often see is that the shakers cause not only the fruit to detach from the plant, but also foreign bodies such as leaves, stems, portions of shoots and at times even fragments of posts, clips and suchlike. Before starting to work grapes to produce wine, and specifically before crushing, these foreign bodies therefore need to be removed from the harvested product.

This is usually carried out directly in the cellars by specific machines referred to as 'destemmers' or alternatively by hand by a group of workers.

To optimise the machine's harvest capacity and to decrease the selection work carried out in the cellars, the latest grape harvesters have been fitted with their own built-in destemmers.

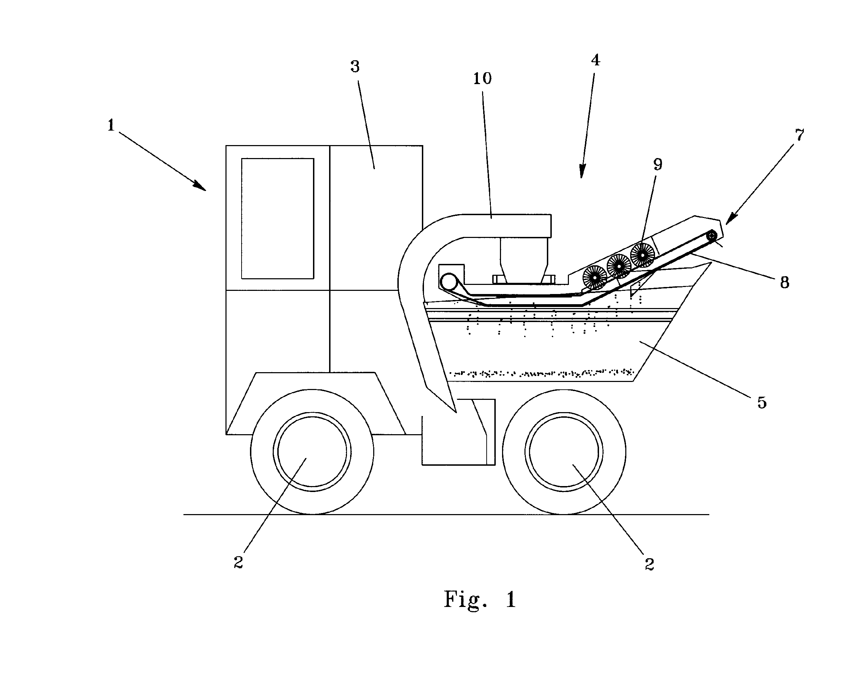

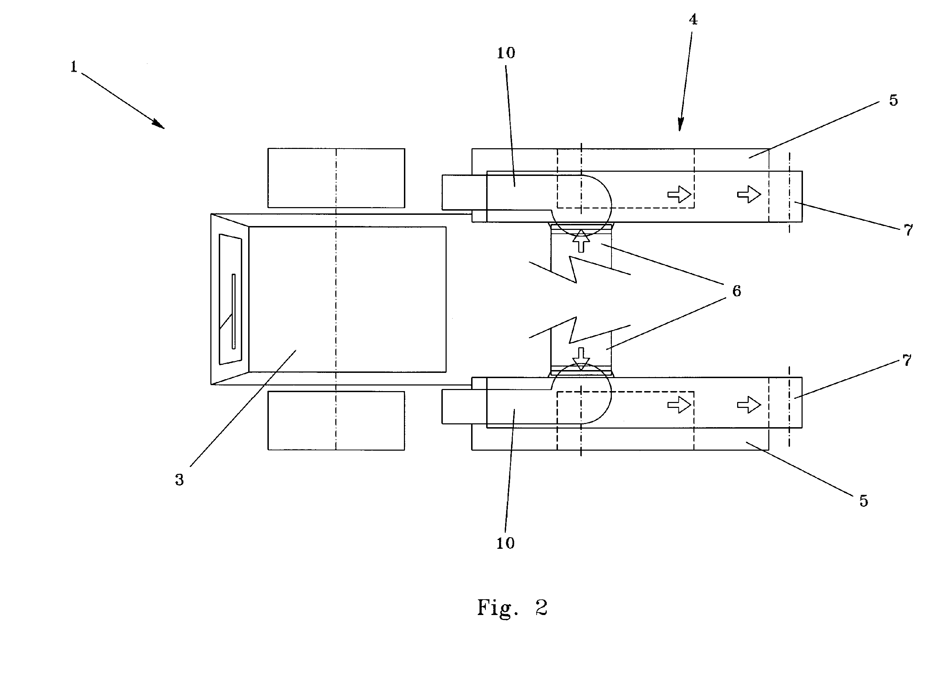

Figures 1 and 2 show an example of a self-propelled grape harvester of known technique, featuring 'destemmer' devices.

With reference to the figures, the machine consists of a vehicle, referred to in the diagram as 1, which comprises a frame assembled on wheels (2), and on which a cabin (3) is installed along with a harvest systems, specified in the diagram as no. 4.

Inside the vehicle, which cannot be seen from the figure, there are mechanical means that remove the bunches of grapes from the row.

As already mentioned, these means generally consist of shakers that move the vines, causing the bunches and grapes to be detached, without damaging the plant or product.

A pair of baskets (5) are installed in the rear part of the machine, supplied by a pair of belts (6) designed to receive the harvested product from the shakers.

A suction device (10) is mounted above each basket. This removes the larger waste, such as leaves and shoots, and a destemmer (7) that carries out a more careful selection of the harvest before it is collected into the basket below.

The destemmer basically consists of a grille belt (8) with a weave of dimensions similar to that of a grape, and one or more rotating brushes (9) positioned at the end of the belt.

The operation of the destemmer is fairly simple: the harvested fruit is collected by a belt (6) and transported towards the grille belt (8). This is suitably sized to allow the grapes to fall into the baskets (6) located beneath the destemmer as they progress along the belt (8).

At the end of the belt, the rotating brushes (9) exert gentle pressure onto the remaining grapes to force their passage through the belt openings (8). At the same time, they help offload leaves, shoots and other such foreign bodies that have remained outside the machine.

However, there is widespread agreement that this device is not able to make a sufficiently accurate selection. In actual fact, small pieces of leaves and other small foreign bodies continue to be found amongst the harvest, which have managed to pass through the weave of the grille belt.

Even using this type of grape harvester, therefore, a further selection is in any case required in the cellar before being able to proceed with crushing in order to guarantee the quality of the finished product.

This further selection process, whether carried out by machine or manually, constitutes an additional cost that consequently affects the overall cost of producing wine.

Moreover, some wine experts believe that the presence of foreign bodies with the fruit can affect the quality of wine obtained right from the harvesting stage.

In actual fact, several hours may pass from when the fruit is collected into the baskets to when it is actually crushed. This therefore allows sufficient time for the juice of grapes that have been crushed or lacerated in the baskets to begin fermenting.

And during this fermentation, the presence of woody elements and other foreign bodies can certainly affect the product, altering the flavour and quality of the wine consequently obtained.

Another limit to the selection where carried out exclusively by machine is that green or unripe grapes cannot be removed - at present this is only possible by hand.

For some of the most important wines, green grapes must be eliminated, or only a certain, pre-defined quantity left. In these cases, manual selection is a must (more costly).

In this context, the purpose of this invention is to propose a grape harvester that is equipped with a means by which to make the harvest selection, overcoming the issues of the technique as described above. More specifically, the idea is to create a grape harvester with a harvest selection means that allows for the most accurate on-board machine selection possible, and which consequently eliminates the need for further work before crushing.

More specifically, the purpose of the invention is to propose a grape harvester equipped with means by which to carry out a selection of the harvest that is able to separate out the fruit from all the foreign bodies collected during the shaking process.

A further purpose of this invention is to supply a grape harvester equipped with a harvest selection means able to identify and separate out green, unripe grapes from the ripe ones.

These purposes are basically achieved by a grape harvester equipped with means for harvest selection comprising the technical characteristics shown in one or more of the claims attached.

Further characteristics and advantages of this innovation become clearer in the indicative, and therefore not limiting, description of an example of preferred, but not exclusive, embodiment of a grape harvester equipped with harvest selection means. This is shown in the attached figures where:
- figure 3 is a side view of a first version of a grape harvester equipped with harvest selection means, according to the invention;
- figure 4 is a side view of a second version of a grape harvester equipped with harvest selection means, according to the invention;
- figure 5 is a view of the machine in figure 4 from above.

With reference to the figures attached, the grape harvester (11) consists of a vehicle (11), which comprises a frame assembled on wheels (12), and on which a cabin (13) is installed along with the harvest systems, specified in the diagram as no. 14.

Shakers are positioned inside the machine, and therefore not visible in the figure. These strike the plant, removing the bunches and grapes from the row. A pair of baskets (15) are installed in the rear part of the machine, supplied by a pair of belts (16) designed to receive the harvested product from the shakers.

A suction device (20) is mounted above each basket. This removes the larger waste, such as leaves and shoots, and a destemmer (17) that carries out a more careful selection of the harvest before it is collected into the basket below. The destemmer basically consists of a grille belt (18) with a weave of dimensions similar to that of the fruit, namely of a grape, and one or more rotating brushes (19) positioned at the end of the belt.

The invention features the provision of a machine equipped with a further harvest selection device referred to in the figure as no. 21, downstream of the destemmer (17).

This selection device consists of a conveyor built onto which the grapes are laid in a uniform fashion. A foreign body 'recognition' area is positioned at the end of this belt, fitted with a recognition system that comprises a scanning sensor that effectively scans the product as it progresses, in order to recognise these foreign bodies and save their position.

Immediately downstream of the sensor, there are expulsion means consisting of compressed air spray systems that are used to remove the parts to be eliminated as they pass by.

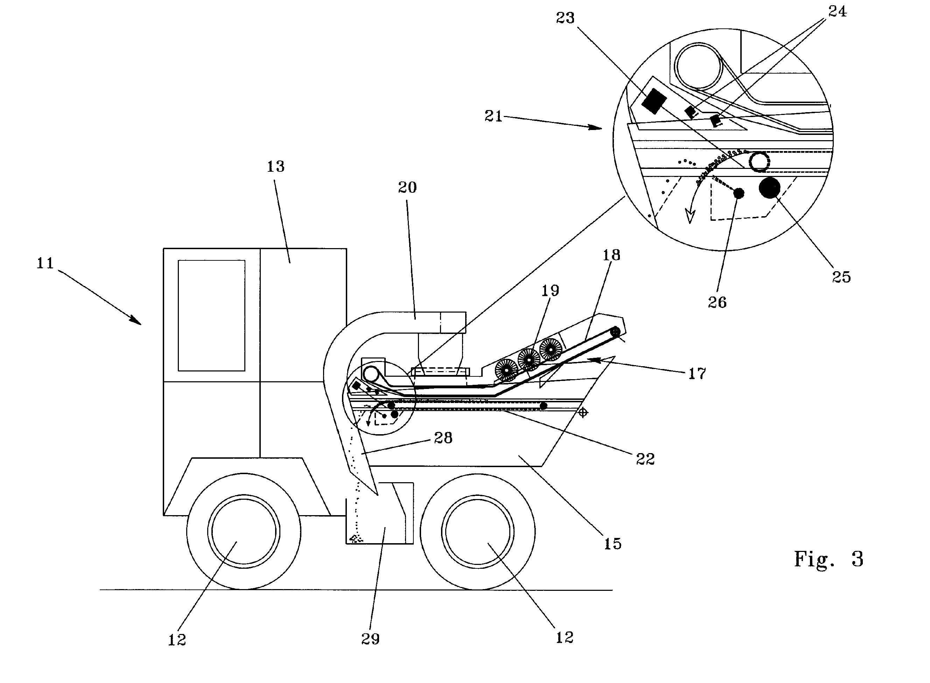

Figure 3 shows a first version of the grape harvester according to the invention. With reference to this figure, the selection device (21) consists of a belt (22) positioned upstream of each basket (15), a sensor (23) and an expulsion mechanism (26).

In greater detail, the sensor (23) consists of a video camera located on the edge of the end of the belt (22), connected to a control system (computer, plc or similar) set up with a software able to analyse the data acquired by the video camera and, more specifically, the colour or shape of the objects scanned.

To facilitate analysis by the video camera, there are also lighting devices (24), preferably positioned to the side of the video camera and a light mark (25), preferably positioned opposite the video camera, with a colour chosen to highlight the colour of the objects scanned.

The belt (22) is preferably positioned between the destemmer device, if present, and the basket (15) and, in any case, above said basket (15). It is equipped with an encoder or similar devices connected to the control system analysing the belt speed in order to calculate the position of any foreign bodies and therefore activate the expulsion mechanism at the right time.

Said expulsion mechanism (26) should preferably consist of a nozzle supplied with compressed air by a solenoid valve connected to the control system and able to spray a jet of compressed air against the foreign bodies detected by the video camera.

Said expulsion mechanism may also be a mechanical type device, such as a deviator or similar. In this case too, the expulsion mechanism is connected to the control system, which commands its activation and deactivation.

The grape harvester functions as follows:
the harvesting and selection stage by means of the destemmer is identical to that of the machines of known technique as described previously.
Subsequently, once the fruit and any foreign bodies have crossed the mesh belt (18), they do not end up in the basket (15) but rather fall onto the belt below (22). This belt takes them to the foreign body recognition area where the video camera (23) is located.

When falling from the belt (22) into the basket (15) below, the fruit, i.e. the grapes, and any foreign bodies are conveyed in front of the video camera (23), which scans them and sends the images to the control system.

The control system analyses the images received and is able to recognise, from the colour or shape, if an object that has passed is a ripe grape, or good product, or rather a green, unripe grape or other foreign body, and therefore requires discarding.

If a foreign body or green grape travels in front of the video camera the control system memorises its position and when the object transits in front of the expulsion device (26), it sends an activation signal to said expulsion device (26), which therefore sprays a jet of air against the object, deviating its fall trajectory.

More specifically, green grapes or foreign bodies expelled are pushed into the outlet pipe (28) of the extractor (20), which flows into the waste collection tank (29).

In this way, a far more accurate selection is ensured as compared with that carried out by traditional machines. It therefore allows for the harvest to be used directly, with no further selection processes required.

As mentioned previously, for some of the more valuable wines, a predetermined, controlled quantity of green grapes is also used.

In these cases, a manual selection must be made in order to dose the quantity of green grapes to be removed and those to be left in with the harvest.

To solve this problem, this invention proposes a second version that involves a grape harvester able to recover the green grapes that have been expelled for re-use as required.

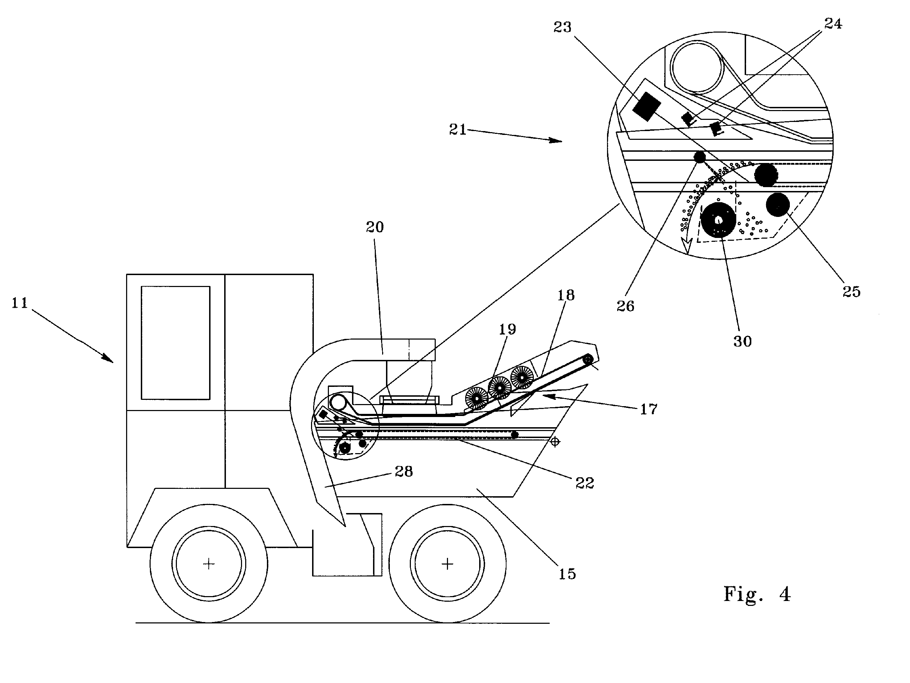

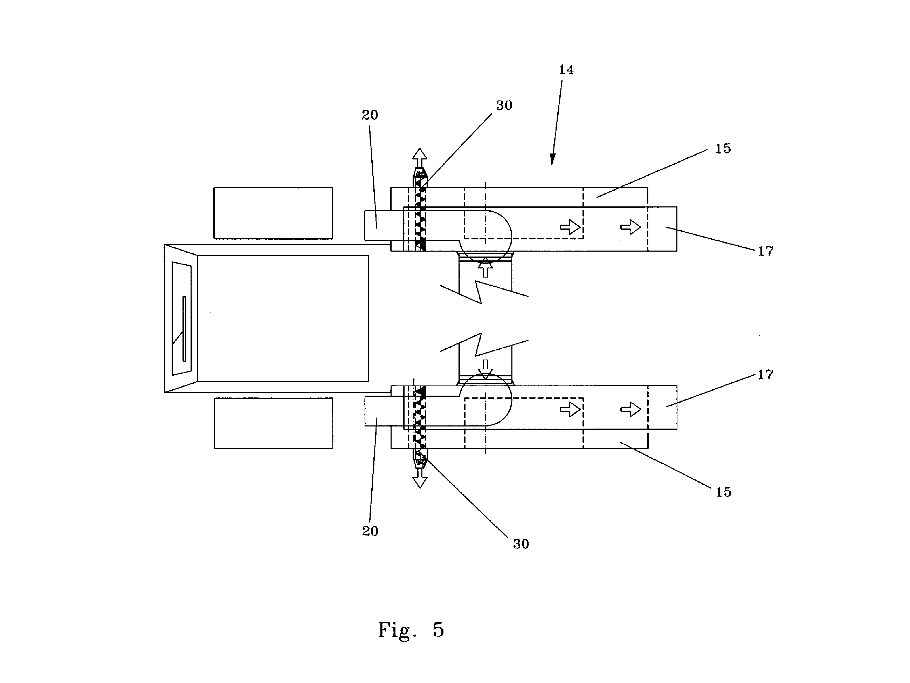

Figures 4 and 5 show this second version of the grape harvester according to the invention.

As a whole, the machine remains basically unchanged from the version described previously.

The selection device (21) also continues to consist of a conveyor belt (22), a video camera (23), one or more lighting devices (24), a light mark (25), an expulsion device (26) and a control system managing all these elements.

In this second version, the invention includes a cochlea (30) positioned at the level of the expulsion device (26).

When a foreign body or green grape is recognised by the control system, this sends an activation signal to the expulsion device (26), which therefore sprays a jet of air against the object, deviating its fall trajectory.

In this case, the green grapes or foreign bodies that have been expelled do not end up in the outlet pipe (28), but rather are driven into the cochlea, which takes them outside the machine and onto other harvest means not shown in the figure.

In this way, a certain quantity of green grapes is obtained, separated from the extractor waste and ready for re-use, if required, or later discard.

A sector expert will then be able to envisage alternative modifications and variants that must, however, be considered as all covered by the scope of this invention.

## Claims

1. A grape harvester consisting of a vehicle (11) onto which means have been assembled that are able to detach and collect the fruit from the plants, along with means (15) suitable for receiving said fruit, **characterised in that** it comprises means for harvest selection that are able to separate out said fruit from any undesired foreign bodies, said means comprising:
- at least one sensor (23) able to scan the fruit harvested and any foreign bodies;
- a lighting system (24, 25) able to illuminate the objects to be scanned;
- an expulsion device (26) able to separate out the fruit from any foreign bodies;
- a control system able to receive data sent by the sensor (23), to analyse said data and to command the expulsion device (26);
- means for the collection of expelled foreign bodies.

2. The grape harvester according to claim 1, **characterized in that** said sensor (23) is a video camera able to detect colour or shape parameters of the object analysed.

3. The grape harvester according to claim 1, **characterized in that** said lighting system includes at least one light mark (25), basically positioned opposite the video camera (23), with said light mark having a colour chosen to highlight the colour of the objects scanned.

4. The grape harvester according to claim 1, **characterized in that** said lighting system includes at least one lighting device (24), basically positioned alongside said video camera (23).

5. The grape harvester, according to claim 1, **characterized in that** said expulsion system (26) includes a nozzle (26) supplied with compressed air by a solenoid valve commanded by the control system.

6. The grape harvester according to claim 1, **characterized in that** said means for the collection of expelled foreign bodies include a cochlea (30) positioned at the level of the expulsion device (26).

7. The grape harvester consisting of one vehicle (11) with the following:
- mechanical means able to detach the fruit from the plant;
- means by which to harvest said detached fruit;
- first harvest selection means able to separate the fruit from portions of shoots, leaves and other foreign bodies larger in size than the fruit;
- second selection means able to separate the fruit out from foreign bodies of basically the same size or smaller than the fruit;
- means for collecting the selected fruit;
- means for collecting discarded foreign bodies;
**characterized in that** said second selection means consist of:
- a conveyor belt (22) on which the fruit is laid out in a uniform fashion, able to convey the grapes towards a foreign body recognition area;
- at least one sensor (23), positioned at the level of the output edge of the belt (22), able to scan the fruit and any foreign bodies as may fall from said belt;
- a light mark (25), basically positioned opposite the sensor (23), with a colour chosen to highlight the colour of the objects scanned;
- at least once lighting device (24) positioned basically in a lateral position to said sensor (23);
- an expulsion device (26) able to separate out the fruit from any foreign bodies;
- a control system able to receive data sent by the sensor (23), to analyse said data and to command the expulsion device (26).

8. The grape harvester according to claim 7, **characterized in that** said sensor (23) is a video camera able to detect colour or shape parameters of the object analysed.

9. The grape harvester according to claim 7, **characterized by** the fact that said expulsion system (26) includes a nozzle supplied with compressed air by a solenoid valve commanded by the control system.
